# EUROPEAN PATENT APPLICATION

(11) **EP 1 954 069 A1**
(43) Date of publication of application: **06.08.2008**
(21) Application number: 06822829.5
(22) Date of filing: 01.11.2006
(51) Int. Cl.: H04Q 7/22

(54) **RADIO ACCESS NETWORK APPARATUS, MOBILE STATION AND HANDOVER CONTROL METHOD**

(30) Priority: 02.11.2005 JP 2005348427
(71) Applicant: NTT DoCoMo, Inc., Chiyoda-ku Tokyo 100-6150 (JP)
(72) Inventor: IWAMURA, Mikio c/o IP Depatment, NTT DoCoMO, Inc., Chiyoda-ku, Tokyo 100-6150 (JP); ISHII, Minami c/o IP Depatment, NTT DoCoMO, Inc., Chiyoda-ku, Tokyo 100-6150 (JP); NAKAMURA, Takehiro c/o IP Depatment, NTT DoCoMO, Inc., Chiyoda-ku, Tokyo 100-6150 (JP)
(74) Representative: HOFFMANN EITLE
(86) International application number: PCT/JP2006/321909
(87) International publication number: WO 2007/052722

(57) **Abstract**

A radio access network apparatus includes: a receiver unit 211 configured to obtain, from a mobile station, radio quality data that indicates a radio quality of a communication link between the mobile station and a base station; a command generating unit 261 a configured to generate a measurement command for instructing the mobile station to initiate a measurement of a communication status of a neighbour cell of the mobile station, when the radio quality data satisfies a predetermined condition; and a transmitter unit 281 configured to transmit the measurement command to the mobile station.

## Description

### Technical Field

The present invention relates to radio access network apparatuses, mobile stations and handover control methods.

### Background Art

In a conventional mobile communication system, in order to perform a handover, a mobile station UE measures communication statuses of links between the mobile station UE and neighbour cells. Then, on the basis of the measurement result, a radio access network (hereinafter referred to as RAN) transmits, to the mobile station UE, a command for instructing the mobile station to change a cell to connect. Thus, the mobile station UE changes a cell connection in response to the command from the RAN.

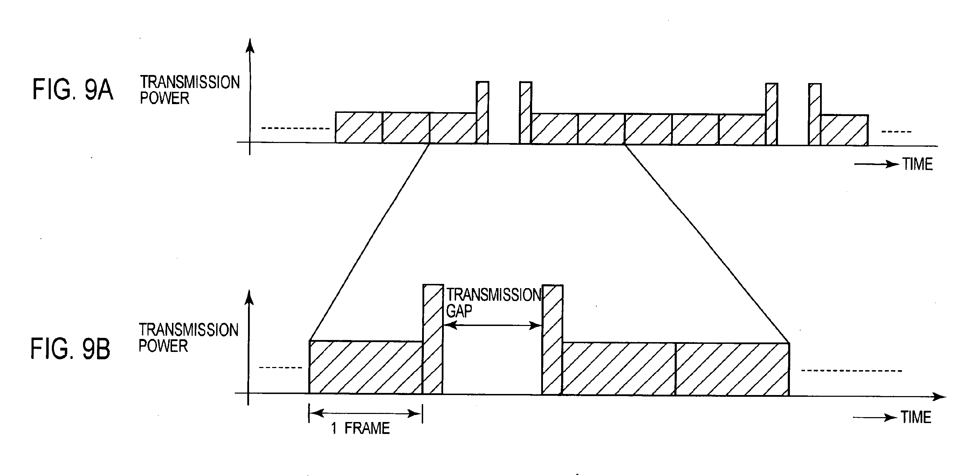

Specifically, by using a compressed mode as shown in Fig. 9, the mobile station UE periodically measures, as the communication statuses of the neighbour cells, the communication statuses (a measurement value of a propagation loss, a reception power, a signal-to-interference ratio, and the like) of the links between the mobile station UE and the neighbour cells. The compressed mode is one of methods used for measuring the communication statuses of the neighbour cell, in order to perform the handover.

Further description of the compressed mode will be given in reference to Fig. 9. Note that Fig. 9 B is an enlarged view of a portion of Fig. 9 A.

When the mobile station UE performs the handover, the mobile station UE measures the communication statuses of the neighbour cells. In general, the mobile station UE only includes a single communication device, and thus cannot measure the communication statuses of the neighbour cells during data communication.

Accordingly, on a link between the mobile station UE and a base station, the mobile station UE suspends a transmission in a frame (stopping the transmission from the base station) for a predetermined period, and creates a transmission gap. Thus, the mobile station UE measures a communication status of the link between the mobile station UE and the base station which controls the neighbour cells.

According to 3GPP specification, for example, a communication status of a common pilot channel transmitted from a base station is measured as the communication statuses of the neighbour cells.

Conventionally, the mobile station UE transmits the measurement result of communication statuses of an own cell and the neighbour cell, to the RAN through a radio interface, on a regular basis or when a predetermined condition (e.g., the measurement value exceeding a threshold) is satisfied.

Based on these measurement results, the RAN determines that the mobile station UE needs to change the cell connection, from the cell to which the mobile station UE is currently connected, to a different cell. Then, the RAN transmits a command for instructing the mobile station UE to change the cell connection, at an appropriate timing.

When the above-described command is received, the mobile station UE changes the cell connection. The handover is thus performed in the conventional mobile communication system (refer to Non-patent Document 1 and Non-patent Document 2, for examples).

However, according to the conventional mobile communication system, the mobile station UE needs to frequently measure the communication status between the mobile station and the own cell, and the communication status between the mobile station UE and the neighbour cell, in order to perform the handover. Accordingly, the mobile station UE spends large amount of power or the like.

In the compressed mode shown in Fig. 9, for example, data to be transmitted during the transmission gap need to be transferred at high-speed in a time when the transmission is possible.

To achieve high-speed data transmission in the compressed mode, the conventional mobile communication system secures a transfer rate and a line quality by reducing a spreading ratio before and after the transmission gap.

As described above, there has been a problem in the conventional mobile communication system where the mobile station UE requires a large amount of power to perform the handover and the battery of the mobile station UE is consumed at a rapid rate.

In addition, there have been problems that a large number of processes need to be performed in order to perform the handover. The processes include such as; the mobile station measures the communication status of the neighbour cell and transmits the measurement result to the base station, and the base station transmits a command for instructing the mobile station to change the cell connection, in accordance with the measurement result.
Non-patent document 1: 3GPP TSG-RAN TS25.212 v6.6.0
Non-patent document 2: "W-CDMA Mobile Communication Systems" edited by Keiji Tachikawa, p. 140

### Disclosure of the Invention

The present invention has been made in view of the above-described problems, and has an object of providing a radio access network apparatus, a mobile station and a handover control method, which can reduce processes performed by the mobile station when a handover is performed, and use less resource of the mobile station for performing the handover.

A first aspect of the present invention is summarized in that a radio access network apparatus includes: a receiver unit configured to obtain, from a mobile station, radio quality data that indicates a radio quality of a communication link between the mobile station and a base station; a command generating unit configured to generate a measurement command for instructing the mobile station to initiate a measurement of a communication status of a neighbour cell of the mobile station, when the radio quality data satisfies a predetermined condition; and a transmitter unit configured to transmit the measurement command to the mobile station.

A second aspect of the present invention is summarized in that a radio access network apparatus includes: a receiver unit configured to obtain, from a mobile station, radio quality data that indicates a radio quality of a communication link between the mobile station and a base station; a command generating unit configured to generate a switch command for instructing the mobile station to perform a handover from a first cell to which the mobile station is currently connected to a second cell different from the first cell, when the radio quality data satisfies a predetermined condition; and a transmitter unit configured to transmit the switch command to the mobile station.

A third aspect of the present invention is summarized as including: a radio quality measurement unit configured to measure a radio quality of a communication link between the mobile station and a base station, and to obtain radio quality data that indicates the radio quality; a receiver unit configured to obtain, from a radio access network apparatus, a measurement command for instructing the mobile station to initiate a measurement of the communication status of a neighbour cell; a measurement unit configured to measure the communication status of the neighbour cell after the measurement command is received; and a transmitter unit configured to transmit, to the radio access network apparatus, the radio quality data and the measurement result of the communication status.

A fourth aspect of the present invention is summarized as that a handover control method includes: obtaining, at a mobile station, radio quality data that indicates a radio quality of a communication link between the mobile station and a base station; obtaining, at a radio access network apparatus, the radio quality data from the mobile station; generating, at the radio access network apparatus, a measurement command for instructing the mobile station to initiate a measurement of a communication status of a neighbour cell of the mobile station, when the radio quality data satisfies a predetermined condition; transmitting, from the radio access network apparatus to the mobile station, the measurement command; and measuring, at the mobile station, the communication status of the neighbour cell of the mobile station.

### Brief Description of the Drawings

[Fig. 1] Fig. 1 is an overall configuration diagram of a mobile communication system according to a first embodiment of the present invention.
[Fig. 2] Fig. 2 is a functional block diagram of a base station of the mobile communication system according to the first embodiment of the present invention.
[Fig. 3] Fig. 3 is a functional block diagram of a mobile station of the mobile communication system according to the first embodiment of the present invention.
[Fig. 4] Fig. 4 is a functional block diagram of a base station of a mobile communication system according to a second embodiment of the present invention.
[Fig. 5] Fig. 5 is a functional block diagram of a base station of a mobile communication system according to an alternative embodiment of the present invention.
[Fig. 6] Fig. 6 is a functional block diagram of a mobile station of a mobile communication system according to the alternative embodiment of the present invention.
[Fig. 7] Fig. 7 is a sequence pattern diagram showing operations in a handover control method in the mobile communication system according to the embodiment of the present invention.

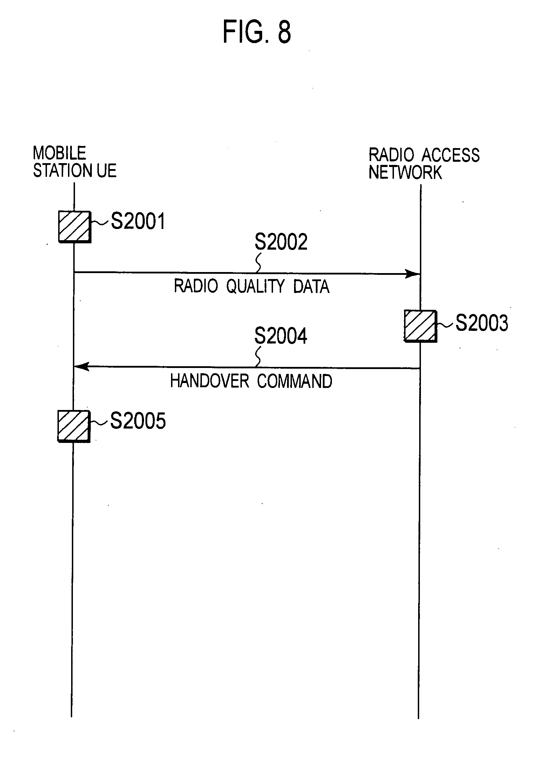

[Fig. 8] Fig. 8 is a sequence pattern diagram showing operations in a handover control method in the mobile communication system according to the modified example of the present invention.
[Fig. 9] Fig. 9 is a diagram of a compressed mode for describing a conventional invention.

### Best Modes for Carrying out the Invention

### (Mobile communication system according to first embodiment of the present invention)

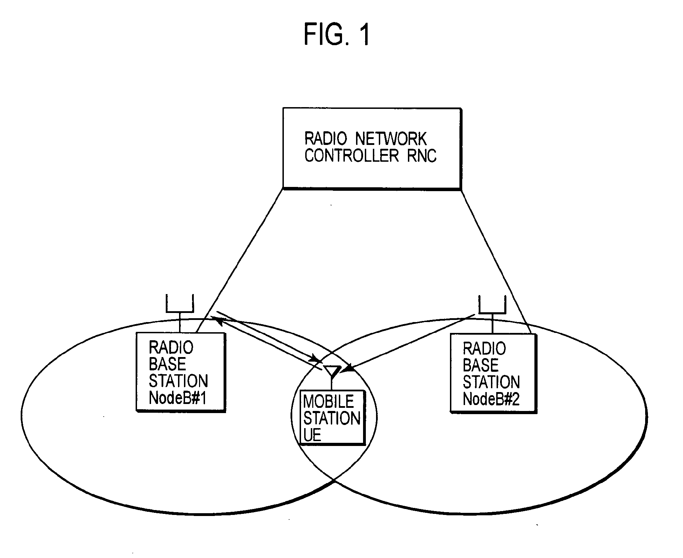

A radio access network apparatus according to a first embodiment of the present invention will be described with reference to Fig. 1 to Fig. 3.

In an example of Fig. 1, a mobile station UE forms a link between the mobile station UE and a cell controlled by a radio base station Node B #1. The mobile station UE is configured to measure a radio quality of the cell in which the mobile station UE is located and controlled by the radio base station Node B #1, and a cell controlled by the radio base station Node B #2. The mobile station UE is configured to transmit, to the radio base station Node B #1, a CQI (Channel Quality Indicator) which indicates the radio quality.

In the example of Fig. 1, the mobile station UE is connected to the cell controlled by the radio base station Node B #1 via a link.

However, when the radio base station Node B #1 receives the CQI from the mobile station UE and when the received CQI satisfies a predetermined condition, the radio base station Node B #1. instructs the mobile station UE to initiate a measurement of the radio qualities of multiple links which connects the mobile station UE with the radio base station Node B #1 and the radio base station Node B #2, respectively.

When the measurement result of the communication statuses is received, the radio base station Node B #1 selects the most appropriate cell to be change the cell connection.

When the above-described instruction is received, the mobile station UE changes the cell connection, from the cell to which the mobile station UE is currently connected, to a different cell. The mobile station UE is configured to perform a handover as described above.

A radio network controller RNC of the present invention is an apparatus located in an upper level than the radio base station Node B, and is configured to control a radio communication between the mobile station UE and the radio base station Node B.

In the present embodiment, the radio network controller RNC and the radio base stations Node B are collectively called as a radio access network apparatus.

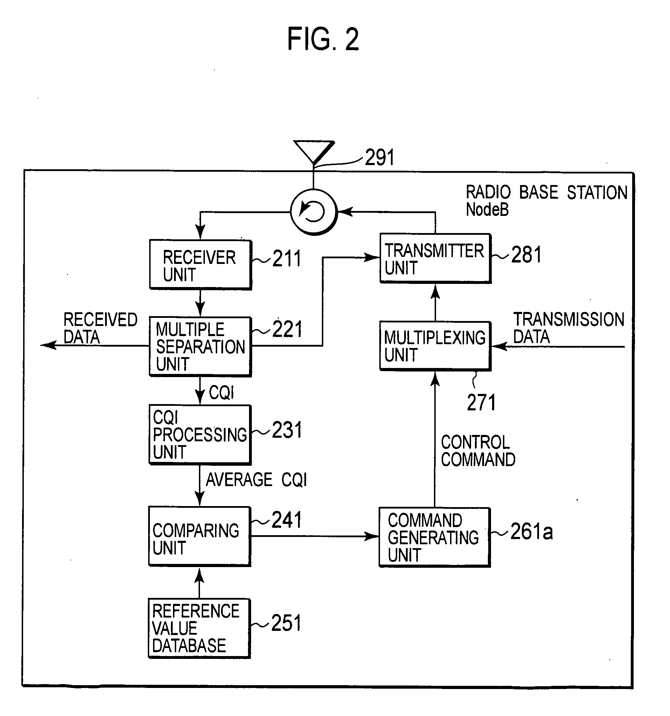

Further description will be given by using Fig. 2 for functions of the radio access network apparatus, which obtains the CQI from the mobile station UE and instructs the mobile station UE to measure the communication status.

Although Fig. 2 is described in relation to the radio base station Node B #1 in the access network apparatus of the present invention, it should be noted that part of the functions may be included in the radio network controller RNC, and each of the other base stations Node B has similar functions.

As shown in Fig. 2, the radio base station NodeB#1 is provided with a receiver unit 211, a multiple separation unit 221, a CQI processing unit 231, a comparing unit 241, a reference value database 251, a command generating unit 261 a, a multiplexing unit 271 and a transmitter unit 281.

Note that each of these components is not necessarily be implemented as an individual hardware. In other words, the components may be combined, or may be configured through a process of software.

The receiver unit 211 is configured to receive, through the link with the mobile station UE, a link signal from the mobile station UE.

The multiple separation unit 211 is configured to obtain, from the receiver unit 211, user data included in the link signal. Moreover, the multiple separation unit 221 is configured to obtain, from the receiver unit 211, a CQI included in the link signal, and to transfer the obtained CQI to the CQI processing unit 231.

Furthermore, the multiple separation unit 221 is configured to obtain the CQI from the receiver unit 211, and to transfer the obtained CQI to the radio network controller RNC through the transmitter unit 281 and a transmitting and receiving antenna 291.

The CQI processing unit 231 calculates an average CQI that indicates an average value of instantaneously measured CQI data, and transfers the average CQI to the comparing unit 241.

In this way, the comparing unit 241 is allowed to compare the average CQI with an average CQI threshold, while avoiding influence of an instantaneous variance in the radio quality data. Here, the average CQI threshold value is obtained from the reference value database 251.

In this regard, the average CQI is not necessarily the average value of the CQIs, as long as the instantaneous variance in the radio quality data can be smoothed.

Here, "CQI" is a collective term covering sets of feedback information, and is used to deal with high-speed variance in propagation (such as high-speed fading) during communications.

Specifically, the CQI includes a signal-to-interference ratio (herein after referred to as SIR), which is instantaneously measured by the mobile station UE, an instantaneous reception power, an instantaneous propagation loss, and the like.

For instance, in the WCDMA (Wideband Code Division Multiple Access) scheme, the mobile station UE is configured to measure a binary SIR and transmit the measured binary SIR to the radio base station Node B #1 that controls an own cell.

Similarly, in the HSDPA (High-speed Downlink Packet Access) scheme, the mobile station UE is configured to measure an instantaneous SIR, and transmit a quantized CQI to the radio base stations Node B that controls the cell to which the mobile station UE is connected.

Here, it is defined that a large CQI indicates a favorable communication status between the mobile station UE and the cell controlled by the radio base station Node B #1, while a small CQI indicates an unfavorable communication status therebetween.

The comparing unit 241 is configured to compare the average CQI obtained from the CQI processing unit 231 with the average CQI threshold value obtained from the reference value database 251.

When the average CQI is smaller than the average CQI threshold value, the comparing unit 241 transfers, to the command generating unit 261 a, an instruction for generating a measurement command for instructing the mobile UE to initiate a measurement of communication statuses of links between the mobile station UE and each of the multiple cells in which the mobile station UE is located.

On the other hand, when the average CQI is larger than the threshold value, the comparing unit 241 transfers, to the command generating unit 261 a, an instruction for generating a measurement termination command for instructing the mobile station UE to terminate the measurement of the communication statuses of the multiple links that connect the mobile station UE and each of the multiple cells in which the mobile station UE is located.

The reference value database 251 includes the average CQI threshold value. The average CQI threshold value may be a predetermined value, or may be a reference value calculated based on previous average CQI. Further, the average CQI threshold value used when the measurement of the communication status is initiated may differ from the average CQI threshold value used when the measurement of the communication status is terminated.

In response to the instruction for generating the measurement command, the instruction obtained from the comparing unit 241, the command generating unit 261 a is configured to generate the measurement command for instructing the mobile station UE to initiate the measurement of the transmission statuses of the multiple links that connect the mobile station UE and each of the multiple cells in which the mobile station UE is located. Then, the command generating unit 261 a is configured to transmit the generated measurement command to the multiplexing unit 271.

Further, in response to the instruction for generating the measurement termination command, the instruction obtained from the comparing unit 241, the command generating unit 261 a is configured to generate the measurement termination command for instructing the mobile station UE to terminate the measurement of the transmission statuses of the multiple links that connect the mobile station UE and each of the multiple cells in which the mobile station UE is located. Then, the command generating unit 261a is configured to transmit the generated measurement command to the multiplexing unit 271.

The multiplexing unit 271 is configured to receive a transmission data along with a control command. Here, the control command indicates the measurement command or the measurement termination command, which are obtained from the command generating unit. The multiplexing unit 271 then performs a process of multiplexing the received data and converting the data into a signal having a radio frequency band, and transfers the signal to the transmitter unit 281.

The transmitter unit 281 is configured to amplify the signal obtained from the multiplexing unit 271 and the multiple separation unit 221, and to transmit the amplified signal to the radio access network apparatus RNC through the transmitting and receiving antenna 291.

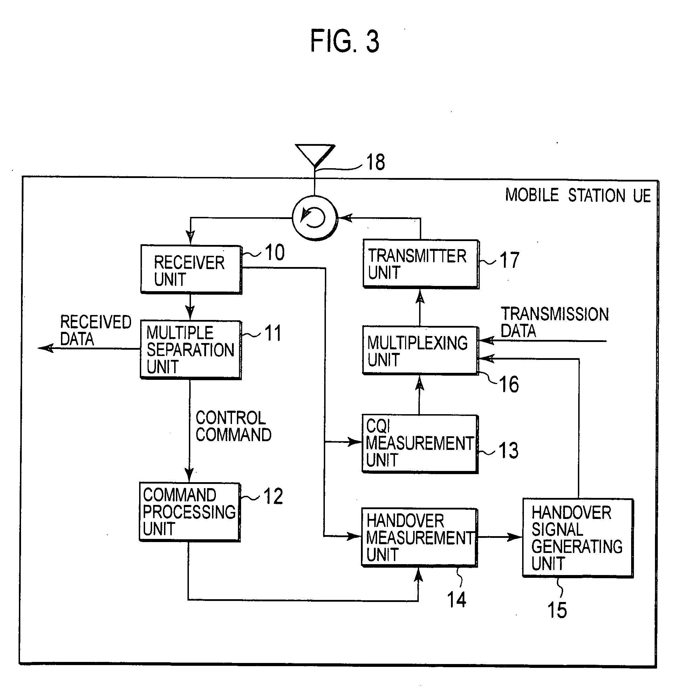

An example of the schematic configuration of the mobile station UE according to this embodiment is shown with reference to Fig. 3. As shown in Fig. 3, the mobile station UE is provided with a receiver unit 10, a multiple separation unit 11, a command processing unit 12, a CQI measurement unit 13, a handover measurement unit 14, a handover signal generating unit15, a multiplexing unit 16 and a transmitter unit 17.

Note that each of these components is not necessarily be implemented as an individual hardware. In other words, the components may be combined, or may be configured through a process of software.

The receiver unit 10 is configured to receive a CQI and physical data from the radio access network through a downlink.

The multiple separation unit 11 is configured to obtain, from the receiver unit 10, user data included in the physical data. Moreover, the multiple separation unit 11 is configured to obtain a measurement command from the receiver unit 10, and to transfer the measurement command to the command processing unit 12.

Furthermore, the multiple separation unit 11 is configured to obtain data from the receiver unit 10, and to transfer the obtained data to the CQI measurement unit and the handover measurement unit 14.

When a control command obtained from the multiple separation unit 11 is a measurement command, the command processing unit 12 is configured to transfer, to the handover measurement unit 14, the measurement command for instructing an initiation of a measurement of communication statuses of links between the mobile station UE and each of the multiple cells in which the mobile station UE is located.

When the control command obtained from the multiple separation unit 11 is a measurement termination command, the command processing unit 12 is configured to transfer, to the handover measurement unit 14, the measurement termination command for instructing a termination of the measurement of the communication statuses of the links between the mobile station UE and each of the multiple cells in which the mobile station UE is located.

The CQI measurement unit 13 is configured to receive data (a radio wave) from the receiver unit 10, and to instantaneously measure the radio quality, such as a signal-to-interference ratio (hereinafter referred to as SIR), the reception power, the propagation loss or the like in the communication link with the base station. Then, the CQI measurement unit 13 is configured to transfer, to the multiplexing unit 16, the measurement result as the CQI.

The handover measurement unit 14 is configured to receive the radio wave from the receiver unit 10. When a control command received from the command processing unit 12 is the measurement command, the handover measurement unit 14 measures the communication statuses of the links between the mobile station UE and each of the multiple cells in which the mobile station UE is located.

The handover measurement unit 14 is configured to receive control data from the receiver unit 10. When the control command received from the command processing unit 12 is the measurement termination command, the handover measurement unit 14 terminates the measurement of the communication statuses of the links between the mobile station UE and each of the multiple cells in which the mobile station UE is located.

The handover signal generating unit 15 is configured to receive a handover measurement result from the handover measurement unit 14, and to transfer, to the multiplexing unit 16, a handover command for instructing the radio access network to perform a handover, or the handover measurement result.

The multiplexing unit 16 is configured to receive the CQI from the CQI measurement unit, the handover measurement result or the handover command from the handover signal generating unit 15, and transmission data such as the user data, the control data or the like. Then, the multiplexing unit 16 performs processing of multiplexing the above-described received data (i.e., the CQI, the handover measurement result or the handover command, and the transmission data) and converting into a signal having a radio frequency band, and transmits the converted signal to the transmitter unit 17.

The transmitter unit 17 is configured to amplify the signal obtained from the multiplexing unit 16, and to transmit the amplified signal to the radio access network apparatus through the transmitting and receiving antenna 18.

### (Effects and advantages of mobile communication system according to first embodiment of the present invention)

The radio access network apparatus according to the first embodiment of the present invention is provided with a receiver unit 211, a command generating unit 261 and a transmitter unit 281. The receiver unit 211 obtains radio quality data from the mobile station UE. The command generating unit 261 generates a measurement command for instructing the mobile station UE to initiate a measurement of the communication status of the link that connects the mobile station UE with the radio base station Node B, when the radio quality data satisfies a predetermined condition. The transmitter unit 281 transmits the measurement command to the mobile station UE.

According to the above configuration, the mobile station UE does not need to frequently measure the communication status between the mobile station UE and the own cell, and the communication status between the mobile station UE and the neighbour cell. Instead, only when the radio quality data satisfies the predetermined condition, the mobile station UE needs to measure the communication status between the mobile station UE and the own cell, and the communication status between the mobile station UE and the neighbour cell. Accordingly, amount of processes required for performing a handover can be reduced.

In other words, it is possible to provide a radio access network that can reduce the amount of processes and resources required for performing the handover at a mobile station UE.

Further, the mobile station UE according to the first embodiment of the present invention is provided with; the CQI measurement unit 13 which measures the radio quality and obtains the radio quality data; the receiver unit 10 which obtains the measurement command from the radio access network apparatus; the handover measurement unit 14 which measures the communication status of the link with the radio base station NodeB; and the transmitter unit 17 which transmits the radio quality data and the measurement result of the communication status to the radio access network apparatus.

According to this configuration, the mobile station measures the radio quality of the own cell and transmits the measurement result to the radio access network. This enables the radio access network to grasp the communication status of the own cell without using the measurement result of the communication status of the neighbour cell, the measurement result transmitted from the mobile station UE.

In other words, this makes it possible to reduce processes performed by the mobile station when the handover is performed, and use less resource of the mobile station for performing the handover.

### (Mobile communication system according to second embodiment of the present invention)

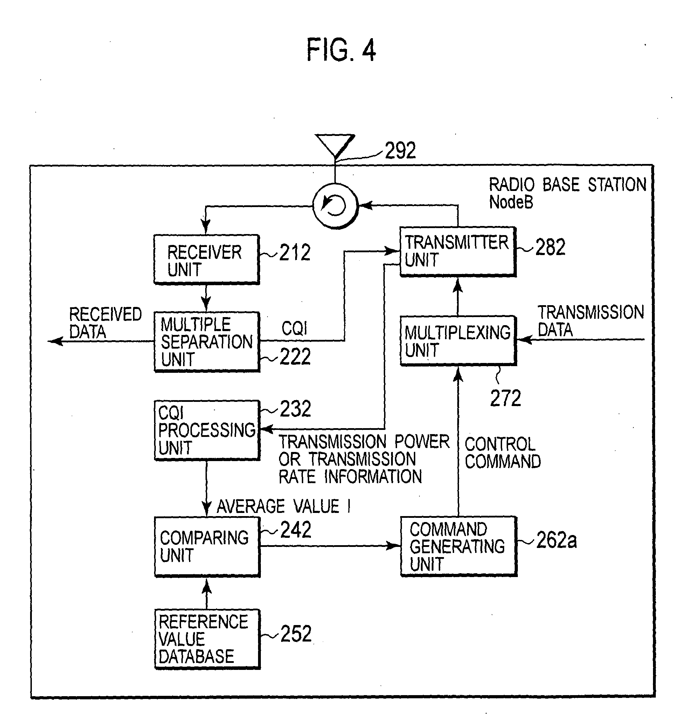

A radio access network apparatus according to a second embodiment of the present invention will be described with reference to Fig. 4.

In the example shown in Fig. 4, a process performed by a multiple separation unit 222 included in the radio base station Node B#1, a CQI processing unit 232 and a comparing unit 242 are mainly different from the radio access network according to the first embodiment.

Specifically, the multiple separation unit 222 is configured to obtain a CQI from a receiver unit 212, and to transfer the obtained CQI to the transmitter unit 282.

The transmitter unit 282 is configured to obtain the CQI from the multiple separation unit 222, to calculate a transmission power or a transmission rate on the basis of the obtained CQI, and to transfer the calculated transmission power or the transmission rate to the radio network controller RNC and the mobile station UE through a transmitting and receiving antenna 292.

The transmitter unit 282 is also configured to transfer, to the CQI processing unit 232, information on the above-mentioned transmission power or the transmission rate.

The CQI processing unit 232 obtains, from the transmitter unit 282, the transmission power of the transmission rate information. Then, the CQI processing unit 232 calculates an average value I of the transmission power or the transmission rate information, respectively, and to transfer each of the calculated average value I to the comparing unit 242.

In this regard, the average value I is not necessarily the average value of the transmission power or the transmission rate information. Alternatively, other values can be used as the average value I, as long as the value is unaffected from the variance in each of the transmission power and the transmission rate information.

The comparing unit 242 is configured to compare the average value I obtained from the CQI processing unit 232, with an average value I threshold value obtained from a reference value database 252.

As described above, by using the transmission power or the transmission rate information as the CQI, the mobile station UE does not need to frequently measure the communication status between the mobile station UE and the own cell, and the communication status between the mobile station UE and the neighbour cell. Instead, only when the radio quality data satisfies a predetermined condition, the mobile station UE needs to measure the communication status between the mobile station UE and the own cell, and the communication status between the mobile station UE and the neighbour cell. Additionally, processes to perform the handover can be reduced.

In other words, this makes it possible to reduce processes performed by the mobile station when a handover is performed, and use less resource of the mobile station for performing the handover.

Such a radio access network can be provided.

### (Mobile communication system according to a modified example of the present invention)

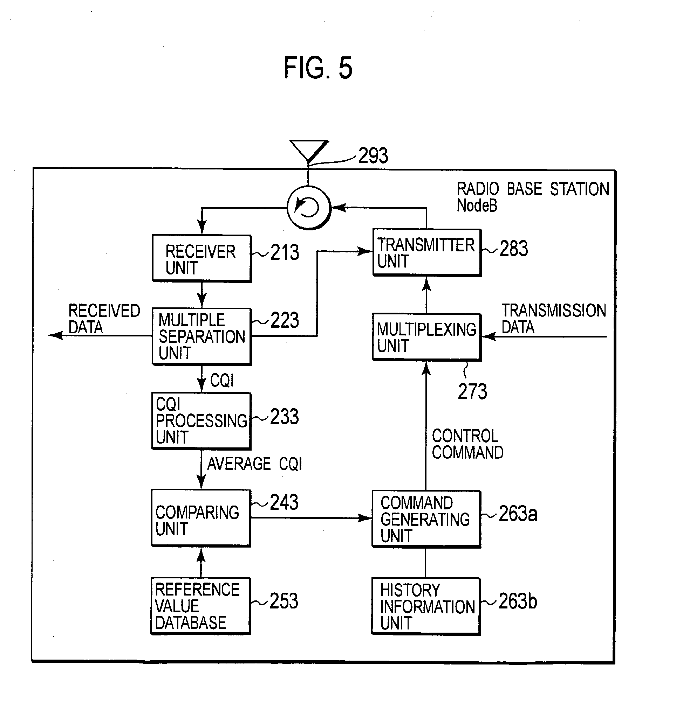

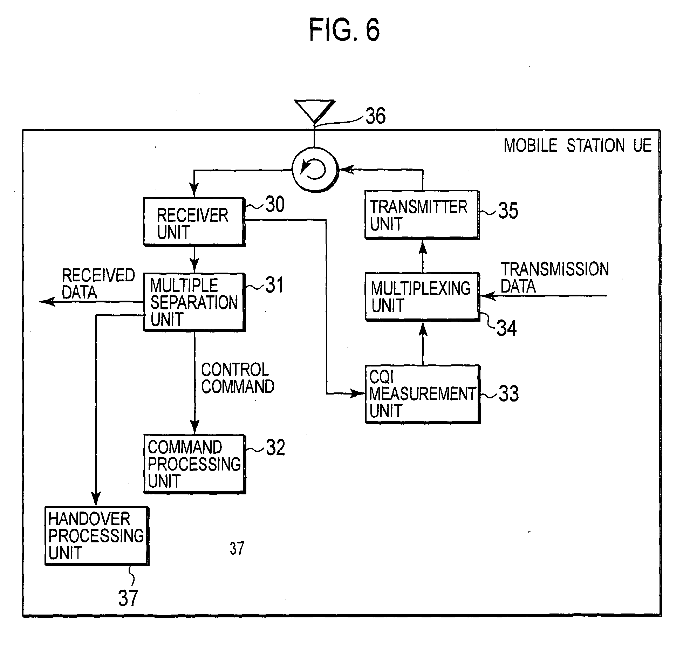

A radio access network apparatus according to a modified example of the present invention will be described with reference to Fig. 5 and Fig. 6.

In an example shown in Fig. 5, a main difference is in that a history information unit 263b is included in the radio access network apparatus.

Specifically, based on an instruction for generating a measurement command, the command generating unit 263a is configured to generate a switch command for instructing the mobile station UE to change a cell connection to a cell different from an own cell, from among the multiple in which the mobile station UE is located. Then, the command generating unit 263a transfers the switch command to the multiplexing unit 273.

The command generating unit 263a is also configured to receive history information from the history information unit 263b. Based on the history information, the command generating unit 263a is configured to generate a switch command for instructing the mobile station UE to change a cell connection to a cell different from the own cell, from among the multiple cells in which the mobile station UE is located. Then, the command generating unit 263a transfers the switch command to the multiplexing unit 273.

Specifically, the history information unit 263b includes the handover history information of mobile stations UE. The handover history information shows a list of the cells with which the mobile station UE has performed handovers.

By referring to the handover history information of a mobile station UE having a similar handover history, the command generating unit 263a can specify a cell to be connected to after the change of the cell connection.

In addition, the history information unit 263b also includes history information of a CQI ratio. The history information of the CQI ratio indicates a the CQI ratio of the cell connected to the mobile station UE before the cell change, to the cell to be connected to the mobile station UE after the cell change.

Using the history information of the CQI ratio allows the command generating unit 261 a to specify the cell to connect in consideration of the CQI ratio.

The multiplexing unit 273 is configured to perform a multiplexing of the switch command, which is obtained from the command generating unit, and transmission data, and to convert the multiplexed data to the signal having a radio frequency band. The multiplexing unit 273 is configured to transfer the signal to the to the transmitter unit 283.

Fig. 6 shows an example of a schematic configuration of the mobile station UE according to the modified example. As shown in Fig. 6, the mobile station UE is provided with a handover processing unit 37, without including the handover measurement unit 14 or the handover signal generating unit 15.

According to the radio access network apparatus of the modified example, a multiple separation unit 31 obtains a switch command through a receiver unit 30, and transfers the switch command to the handover processing unit 37.

The handover processing unit 37 can perform a handover by receiving the switch command from the multiple separation unit 31.

According to the above configuration, the mobile station UE does not need to measure the communication status of the own cell and the communication status of the neighbour cell.

In other words, this makes it possible to reduce processes performed by the mobile station when a handover is performed, and use less resource of the mobile station for performing the handover.

### (Handover control method according to first embodiment of the present invention)

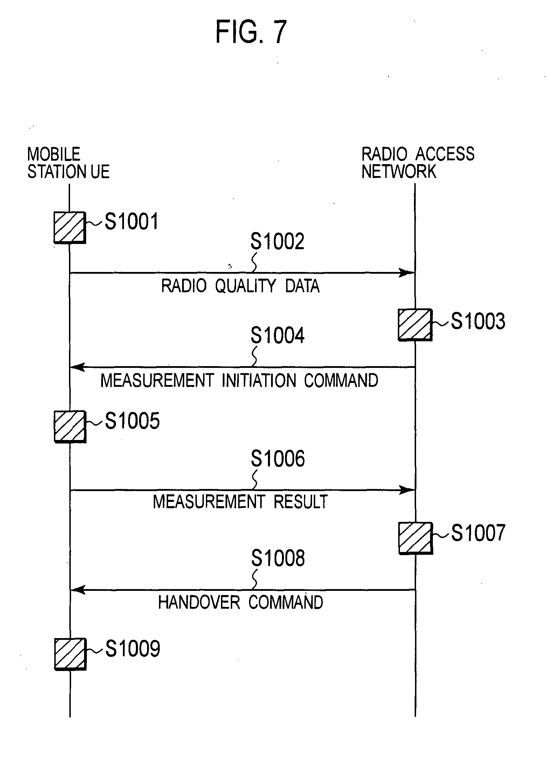

Hereinafter a handover control method according to the first embodiment will be described with reference to Fig. 7. Specifically, a description will be given for a handover method in which the mobile station UE performs a handover by means of the handover control method according to this embodiment.

It should be noted that the handover control method according to this embodiment is not limited to the above-described embodiment, and that various modifications based on the conditions are possible.

As shown in Fig. 7, in Step S1001, radio quality data showing a radio quality of a communication link between the mobile station UE and a radio base station NodeB is obtained.

In Step S1002, the mobile station transmits the radio quality data to the radio base station NodeB.

In Step S1003, when the radio quality data satisfies a predetermined condition, the radio base station NodeB generates a measurement command for instructing the mobile station UE to initiate a measurement of the communication status of the neighbour cell of the mobile station UE.

In Step S1004, the radio access network apparatus transmits a measurement initiation command to the mobile station UE.

In Step S1005, the mobile station UE measures the communication status of the neighbour cell of the mobile station UE, and obtains the measurement result.

In Step S1006, the mobile station UE transmits, to the radio base station NodeB, the measurement result of the communication status of the neighbour cell.

In Step S1007, the radio access network apparatus judges the measurement result and generates a handover command for instructing the mobile station UE to perform a handover.

In Step S1008, the radio access network apparatus transmits the handover command to the mobile station UE.

In Step S1009, the mobile station UE receives the handover command and performs the handover.

### (Effects and advantages of handover control method according to first embodiment of the present invention)

As described above, according to the handover control method of the present invention, the mobile station UE does not need to frequently measure the communication status between the mobile station UE and the own cell, and the communication status between the mobile station UE and the neighbour cell. Instead, only when the radio quality data satisfies a predetermined condition, the mobile station UE needs to measure the communication status between the mobile station UE and the own cell, and the communication status between the mobile station UE and the neighbour cell. Additionally, processes to perform the handover can be reduced.

In other words, this makes it possible to reduce processes performed by the mobile station UE when a handover is performed, and use less resource of the mobile station UE for performing the handover.

### Industrial Applicability

As described above, according to the present invention, it is possible to provide a radio access network apparatus, a mobile station and a handover control method, which can reduce processes performed by the mobile station when a handover is performed, and use less resource of the mobile station for performing the handover.

## Claims

1. A radio access network apparatus, comprising:
a receiver unit configured to obtain, from a mobile station, radio quality data that indicates a radio quality of a communication link between the mobile station and a base station;
a command generating unit configured to generate a measurement command for instructing the mobile station to initiate a measurement of a communication status of a neighbour cell of the mobile station, when the radio quality data satisfies a predetermined condition; and
a transmitter unit configured to transmit the measurement command to the mobile station.

2. A radio access network apparatus, comprising
a receiver unit configured to obtain, from a mobile station, radio quality data that indicates a radio quality of a communication link between the mobile station and a base station;
a command generating unit configured to generate a switch command for instructing the mobile station to perform a handover from a first cell to which the mobile station is currently connected, to a second cell different from the first cell, when the radio quality data satisfies a predetermined condition; and
a transmitter unit configured to transmit the switch command to the mobile station.

3. The radio access network apparatus according to claim 2, further comprising:
a history information unit configured to store a handover history of the mobile station; wherein
the switch command generating unit is configured to specify the second cell based on the handover history.

4. A mobile station, comprising:
a radio quality measurement unit configured to measure a radio quality of a communication link between the mobile station and a base station, and to obtain radio quality data that indicates the radio quality;
a receiver unit configured to obtain, from a radio access network apparatus, a measurement command for instructing the mobile station to initiate a measurement of a communication status of a neighbour cell;
a measurement unit configured to measure the communication status of the neighbour cell after the measurement command is received; and
a transmitter unit configured to transmit, to the radio access network apparatus, the radio quality data and the measurement result of the communication status.

5. A handover control method, comprising:
obtaining, at a mobile station, radio quality data that indicates a radio quality of a communication link between the mobile station and a base station;
obtaining, at a radio access network apparatus, the radio quality data from the mobile station;
generating, at the radio access network apparatus, a measurement command for instructing the mobile station to initiate a measurement of a communication status of a neighbour cell of the mobile station, when the radio quality data satisfies a predetermined condition;
transmitting, from the radio access network apparatus to the mobile station, the measurement command; and
measuring, at the mobile station, the communication status of the neighbour cell of the mobile station.
